# EUROPEAN PATENT SPECIFICATION

(11) **EP 0 180 592 B1**
(45) Date of publication and mention of the grant of the patent: **02.08.1995**
(21) Application number: 85901728.7
(22) Date of filing: 08.03.1985
(51) Int. Cl.: G02F 1/13

(54) **LIGHT MODULATING MATERIAL COMPRISING A LIQUID CRYSTAL DISPERSION IN A SYNTHETIC RESIN MATRIX**
Lichtmodulierendes Material, das in einer Kunstharzmatrix dispergierte Flüssigkristalle umfasst
MATERIAU PHOTOMODULATEUR COMPRENANT UNE DISPERSION DE CRISTAUX LIQUIDES DANS UNE MATRICE DE RESINE SYNTHETIQUE

(30) Priority: 19.03.1984 US 590996
(43) Date of publication of application: 14.05.1986
(73) Proprietor: KENT STATE UNIVERSITY, Kent, OH 44242 (US)
(72) Inventor: DOANE, Joseph, W., Kent, OH 44240 (US); CHIDICHIMO, Giuseppe, IT, 87030 Rende (IT); VAZ, Nuno, A., P., Southfield, MI 48034 (US)
(74) Representative: Adams, William Gordon
(86) International application number: PCT/US85/00397
(87) International publication number: WO 85/04262

(56) References cited:
- FR-A- 2 139 537
- FR-A- 2 243 234
- US-A- 3 620 889
- US-A- 3 864 275
- US-A- 3 872 050
- US-A- 4 048 358
- US-A- 4 435 047
- APPLIED PHYSICS LETTERS, vol. 40, no. 1, 1 January 1982, pp. 22-24, American Institute of Physics, New York, US ; H.G. CRAIGHEAD et al. : "New display based on electrically induced index matching in an inhomogeneous medium"

## Description

### Technical Field

The present invention relates generally to liquid crystal technology, and more specifically to a new light modulating material consisting essentially of liquid crystals dispersed in a synthetic resin matrix.

### Background Art

Some attempts have been made in e past to coat liquid crystals by encapsulation in order to protect the liquid crystal against contamination, oxidation and radiation, etc., and make it possible to produce a solid sheet or film that can be conveniently handled and incorporated in display devices and the like. Specific coating materials that have been proposed include gelatine, gum arabic, polyvinyl alcohol, and polyurethane.

According to U.S. Patent No. 3,872,050, cholesteric or cholesteric-nematic liquid crystals, which may contain dyes to improve the visibility of the color response of the liquid crystals, are coated with a polyurethane material. The resulting film or sheet is disclosed as being color responsive to stress, there being a color shift of reflected light toward shorter wavelengths when the film is stretched and toward longer wavelengths when the film is compressed. There is a similar change in the color of reflected light when the film is heated and cooled. The operation of the cholesteric liquid crystal material disclosed in Patent No. 3,872,050 is governed by the Bragg light scattering properties of the cholesteric liquid crystals and depends upon the pitch length of the cholesteric helix.

A prior art proposal for encapsulating liquid crystals is disclosed in U.S. Patent No. 4,435,047. According to this disclosure, liquid crystal material is encapsulated in a resin and/or polymer, with vinyl alcohol being a preferred encapsulating medium. The material is described as being responsive to an electric field. The encapsulated liquid crystal molecules are ordered so as to block transmission of light when no electric field is applied. In the presence of an electric field, the liquid crystal molecules are aligned to permit transmission of light.

French Patent Application No. 2,139,537 also discloses an encapsulated liquid crystal material. However, the effect which this material exhibits appears to be that known as dynamic scattering, in which optical scattering occurs in the body of the liquid crystal when an electric field is applied thereto, the liquid crystal normally being light transmissive. Although some encapsulating media are mentioned, such as PVA and polyacrylate, there appears to be no reference to the use of an epoxy resin.

U.S. Patent No. 3,620,889 and French Patent Application No. 2,243,234 disclose materials which are based on cholesteric liquid crystal materials.

The present invention provides a light modulating material comprising microdroplets of liquid crystal material dispersed in a solid, cured, light transmissive epoxy resin matrix, wherein the uncured epoxy resin is mixed with said liquid crystal material and a curing agent before it is cured to form said matrix, said liquid crystal material has a nematic or smectic liquid crystal phase, said liquid crystal phase has an ordinary optical index of refraction substantially matched to the index of refraction of the matrix, and the liquid crystal directors of the microdroplets normally being oriented so that the modulating material normally scatters light when the liquid crystal material is in the liquid crystal phase.

An article entitled "New Display Based on Electrically Induced Index Matching in an Inhomogeneous Medium", by H G Craighead et al., in Applied Physics Letters, 40(1), 1st January 1992, pages 22 to 24, describes a display in which the refractive index of a nematic liquid crystal material dispersed in a matrix is controlled either to match the index of the matrix, in which case the display is light transmissive, or to show an index mismatch, whereupon light is scattered. It is indicated that this mechanism is similar to that used in the non-switching Christiansen filters. However, this display is formed by filling a preformed matrix with the liquid crystal material; the liquid crystal is thus not in the form of microdroplets, and the matrix material is not an epoxy resin.

Compared to prior art materials, the material of the invention is easily prepared, has good uniformity of droplet size and spacing, and is more responsive. It is capable of being thermally, electrically, magnetically and electromagnetically addressed to cause the material to be reversibly switched between a light scattering opaque mode and a light transmissive clear mode. The material also is optically responsive to strain, whereby under tension it becomes more transparent and acts to linearly polarise transmitted light in a direction perpendicular to the direction of stretch.

Optimum results have been obtained with cyanobiphenyl liquid crystals. The liquid crystal droplets have been observed to be of uniform size and to have a diameter ranging upward from about 0.2 micrometer (microns) depending upon material preparation.

The epoxy resin used for the matrix is such that it does not react chemically with the liquid crystal material. For maximum contrast in temperature responsive displays, the optical index of refraction of the epoxy resin should match or be similar to that of the liquid crystal in its isotropic phase. In the case of electrically addressed displays, the optical index of refraction of the epoxy resin should match or be similar to the component of the index of refraction of the liquid crystal which is in a direction perpendicular to the surface of the material, i.e., ordinary refractive index. A suitable epoxy resin having these physical properties is a mixture of epichlorohydrin and bisphenol A (part A) and a suitable curing agent (part B). Other useful epoxy resins are those that can be cured by ultra-violet radiation.

Temperature responsive material can be prepared in accordance with the invention using nematic, or many different kinds of smectic liquid crystals, as well as mixtures thereof. The material is opaque when the liquid crystal is in the liquid crystalline phase and clear or light transmissive when the liquid crystal is in its isotropic phase. A thermo-optic response at any particular temperature can be obtained by the use of a liquid crystal that transforms at that temperature from the liquid crystalline phase to the isotropic phase. The process is reversible so that when the temperature of the dispersion material is decreased through the isotropic to liquid crystal phase transition, the material switches from the clear to the opaque state. Thermo-optic devices that respond to different temperatures can be made using liquid crystals having different isotropic-liquid crystalline phase transition temperatures.

Electro-optic or magnetic-optic responsive material is prepared using nematic liquid crystal. The dispersed liquid crystal in its epoxy matrix is placed between two conducting surfaces, one or both of which are transparent. When a voltage of the appropriate magnitude is applied to the conducting surfaces, the material will switch from a white opaque state to a clear state. The process is reversible upon removal of the voltage. If desired, a pleochroic dye can be incorporated into the liquid crystal to enhance the visual contrast between the clear and opaque states of the electrically responding material. By using a black dye, for example, the material will appear black in the opaque state.

As a temperature responsive material, there are several features of the invention that differ significantly from prior art materials and devices and provide important advantages. The physical principle of operation of the invention is based on the contrasting ability of the dispersed liquid crystal to scattering light when the optical index of refraction and the light scattering properties are altered by the phase change of the liquid crystal. In comparison, the operation of cholesteric liquid crystal devices is based upon the Bragg scattering of light when the temperature dependent pitch length of the cholesteric helix becomes comparable to the wavelength of the incident light. The operation of those prior art devices which depend on phase changes of liquid crystal material, such as disclosed in Patent No. 4,279,152, require altering the ordering of dye molecules in order to change light absorption properties. In the material of this invention, the temperature resolution between the white opaque and clear states is governed by the width of the isotropic to liquid crystalline phase transition and as such is an improvement over the temperature resolution of conventional cholesteric devices which depend upon the width of the visible spectrum and the temperature dependence of the pitch length of the cholesteric helix. Another advantage of the invention is that visual contrast between the on and off states is controlled by the contrasting light scattering properties of the dispersed liquid crystal in the isotropic phase relative to that in the liquid crystalline phase, whereas in the cholesteric liquid crystal temperature indicators of the prior art, the visual contrast is governed by the Bragg scattering properties of the twisted cholesteric material relative to a background substrate.

The present invention also permits the use of a wide variety of liquid crystals and phases, including those which have high thermal stability and lifetime. The cholesteric liquid crystals indicators of the prior art have been restricted to cholesteric or chiral materials which have the appropriate temperature dependence of the pitch length. Such liquid crystals typically have poor stability so that displays constructed with them have limited lifetime.

As an electrically responsive material, the invention has features and advantages different from other known voltage or current responsive materials involving liquid crystals. In the material of the invention, an electric field from an a.c. or d.c. voltage source applied to transparent conductors on the surfaces of the material aligns the directors of the dispersed nematic liquid crystal parallel to the electric field. The ordinary index of refraction of the nematic liquid crystal is similar to the index of refraction of the matrix so that light is transmited through the device 15 when the electric field is on. An important characteristic of the invention is that upon removal of the applied electric field, the surface interactions between the epoxy matrix and the dispersed nematic liquid crystal rapidly restore the random alignment of the directors to the condition existing prior to the application of the electric field. The large number and small size of the dispersed liquid crystal droplets provide for a large surface to volume ratio between the epoxy and the liquid crystal to enhance the switching effect. With the material of the invention, the clear state to the opaque state response time can be made in approximately 10-100 milliseconds. When a pleochroic dye is incorporated into the liquid crystal, the principle of operation remains different from other guest-host displays incorporating pleochroic dyes in that it is the epoxy-liquid crystal surface interactions and the large surface-to-volume ratio of the dispersed liquid crystal that restores the nematic directors and hence the guest dye component to its random opaque state orientation upon removal of an applied electric field. This is in contrast to known "phase change" dichroic display cells in which a cholesteric component is added to the liquid crystal to cause or induce random alignment of the dye in the opaque state.

An electrically responsive display cell incorporating strained liquid crystal material exhibits the advantageous faster switching time between the field-on and field-off condition. The switch time of stretched material is about 1 millisecond compared to 10-100 milliseconds in the unstretched material. When the cell includes a crossed polarizer, the stretched material of the invention exhibits improved contrast between the field-on and the field-off states.

Still other features and advantages and a full understanding of the invention will become apparent to those skilled in the art from the following description of the best modes and the accompanying drawings.

### Brief Description of the Drawings

Figure 1 is a fragmentary, schematic illustration in cross-section of an epoxy resin-liquid crystal material of the invention in a clear state.

Figure 2 is an illustration similar to Figure 1 except that the material is shown in an opaque state.

Figure 3 is a fragmentary, schematic view in cross-section of the epoxy resin-liquid crystal material incorporated in an electrically actuated device.

Figure 4 is a fragmentary, schematic illustration in cross-section of the epoxy resin-liquid crystal material in a stretched condition.

### Best Modes for Carrying Out the Invention

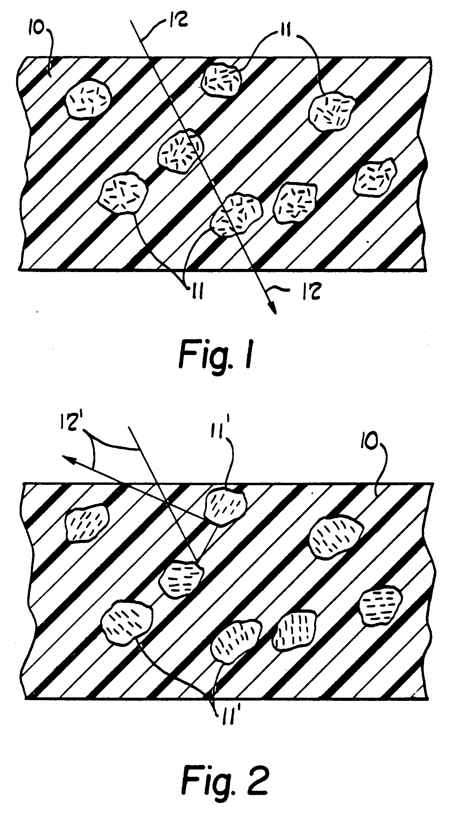

Referring now to the drawings, Figure 1 illustrates a preferred display material of the invention consisting of cured, clear epoxy resin matrix 10 which contains dispersed droplets 11 of liquid crystal. As shown in Figure 1, the liquid crystal component is at a temperature such that it is in a clear isotropic phase. The liquid crystal is selected so that its optical index of refraction in the isotropic phase has a value similar to that of the clear epoxy resin. Light 12 incident upon the material will pass readily through it unscattered. The material in the condition illustrated in Figure 1 is referred to as being in the clear state.

Figure 2 illustrates the same material except that the liquid crystal component 11′ is in a liquid crystalline phase. The liquid crystalline phase can be a nematic or smectic phase or mixtures thereof. When in the liquid crystalline phase, the index of optical refraction is altered relative to that of the isotropic phase and that of the epoxy resin matrix 10 so that light 12′ incident upon the material will be scattered by the liquid crystal. The mismatch between the index of refraction of the epoxy resin matrix 10 and one of the indicies the liquid crystal 11′, the appropriate size of the droplets of liquid crystal, and the light scattering properties of the liquid crystal cause the material to scatter light. The material in the opaque state illustrated in Figure 2 appears as a white opaque texture. The epoxy resin matrix containing the dispersed liquid crystal switches from a clear state to a white opaque state as the temperature is decreased to change the liquid crystal substituent from the isotropic to the liquid crystalline phase.

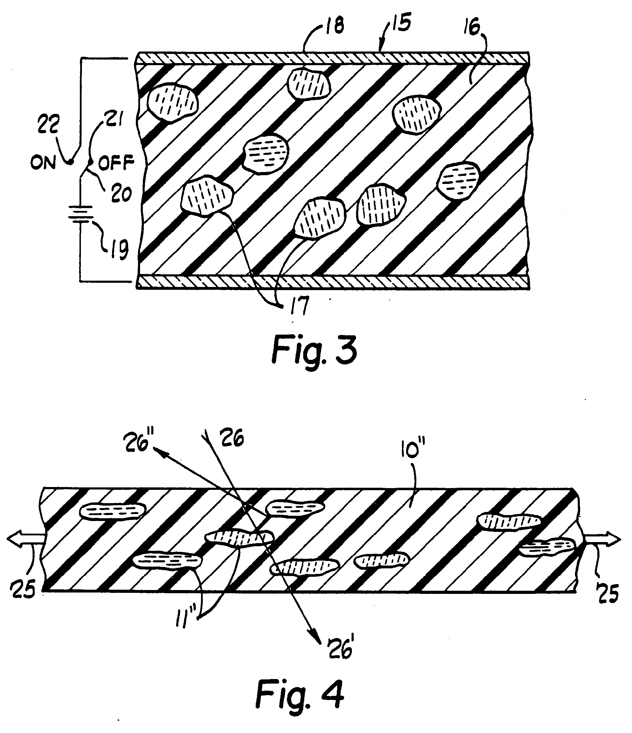

Figure 3 illustrates an electro-optic responsive device 15 capable of being reversibly switched between the opaque and clear states. As shown in Figure 3, a cured, clear epoxy resin 16 containing dispersed droplets of nematic liquid crystal 17 is sandwiched between electrical conductors 18, one or both of which are transparent. A voltage source 19 is connected to the conductors 18 by a switch 20 having off and on positions 21, 22 respectively. When the voltage source 19 is disconnected by placing the switch 20 in its off position 21, the display material appears as a white opaque texture. When an electric field is applied across the epoxy resin-liquid crystal material by closing the switch 20, the material appears in the light transmissive or clear state. The application of the electric field has the effect of aligning the directors of the nematic liquid crystal, parallel to the electric field. The ordinary index of refraction of the nematic liquid crystal is similar to the index of refraction of the matrix so that light is transmitted through the device 15 when the electric field is on.

Figure 4 illustrates the optical response that is obtained when the display material of the invention is stretched by applying mechanical stress, as indicated by the arrows 25. The cured, clear epoxy resin is designated by reference numeral 10˝ and the droplets of liquid crystal that are elongated in the direction of stretch are designated by reference numeral 11˝. The liquid crystal can be nematic or smectic or a mixture thereof in the liquid crystalline phase. When the material is stretched and the liquid crystal is in the liquid crystalline phase, unpolarized light 26 incident on the surface becomes linearly polarized in a direction perpendicular to the direction of stretch upon transmission through the material. The linearly polarized, transmitted light is designated by reference numeral 26′. The remaining polarization 26˝ is scattered from the incident surface. In addition to the polarizing effect, it has been found that the application of mechanical stress to the liquid crystal-epoxy resin material embodied in an electro-optic cell as shown in Figure 3 decreases the switch time between the field-on and field-off states.

The material described in conjunction with Figures 1-4 can be prepared by mixing together an uncured epoxy resin (part A), the liquid crystal, and a curing agent (part B). In a preferred method of manufacture, the liquid crystal is mixed with part B to form a viscous mixture and part A is then added while mixing for several minutes prior to curing. When the liquid crystal is mixed solely with part B, the resulting viscous mixture can be used to form a thermally or electrically addressed display. By the addition of part A, the mixture is cured to form a flexible or rigid solid. As a solid, the material is self-protecting and has the advantage of being easily handled, cut, machined and assembled. The material of Figures 1-4 also can be prepared using epoxy resins cured by other means, such as ultra-violet radiation or the like. Such epoxies are commercially available and are demonstrated by Example IX.

The liquid crystal readily disperses in the epoxy resin so that gentle mixing is all that is required. In order to remove air bubbles which may appear during mixing, the dispersion can either be centrifuged or placed in an evacuation chamber prior to hardening. Miscible individual droplets of liquid crystal appear to be homogeneously distributed throughout the hardened epoxy. It has been found that the individual droplets of liquid crystal are of uniform size and spacing, and that the size and spacing will vary depending upon the epoxy components, the particular liquid crystal, and the method of preparation. The diameter and spacing typically range upward from about 0.2 microns.

Thermo-optic materials that respond to different temperatures are easily prepared using liquid crystals with different isotropic-liquid crystalline phase transition temperatures. They can also be prepared using mixtures of different liquid crystal materials. With currently existing nematic liquid crystals, it is possible to obtain a liquid crystal with an isotropic-nematic phase transition at any temperature within the range from -30°C to 300°C.

The cured epoxy matrix containing dispersed liquid crystal as shown in Figures 1 and 2 is normally a flexible solid and can be cut or cast into films or large articles. The thermo-optic material has applicability in high resolution, high visual contrast thermometers or temperature indicators which can, for example, be used in medical or other technologies, cold food packaging, refrigeration, ice detection on road surfaces, and medical thermograms for the detection of breast cancer, the location of the placenta, etc. The thermo-optic material also can be used in thermally addressed high contrast, wide viewing angle, flat panel displays. Such displays can be electrically addressed by a resistant or Joule-Thomson effect device to locally change the temperature of the material. In other applications, the material can be addressed by a laser beam to locally heat the material surface.

Electro-optic displays as illustrated in Figure 3 can be constructed by deposition or painting of transparent conductive coatings on the surfaces of the material or by curing the epoxy while sandwiched between two rigid plates containing transparent conductive coatings. The visual contrast between the opaque and clear states can be enhanced by a suitable background such as one which is black or lighted. Electro-optic displays that are black or colored in the opaque state can be constructed by the addition of a dichroic dye to the liquid crystal which is dispersed in the epoxy resin. For example, an electro-optic display which is black when no voltage is applied but white when a voltage is applied can be constructed by the use of nematic liquid crystal containing a black pleochroic dye. Such a liquid crystal when dispersed in clear epoxy resin matrix and placed on a white background can achieve a white on black display.

The best modes of the invention are further illustrated and described by the following specific examples.

### EXAMPLE 1

A high contrast temperature responsive material was prepared using a two-component epoxy material sold under the trade designation Bostik 7575 by Emhart Chemical Group, Bostik Division and the liquid crystal. Part A of the epoxy resin was an equimolar mixture of bisphenol A and epichlorohydrin. Part B was a fatty polyamine curing agent. The liquid crystal (E-8 purchased from EM Chemicals) was a mixture consisting of (by weight): 4′n-pentyl-4′-cyano-biphenyl (5CB), 43 wt%; 4′-n-propoxy-4-cyano-biphenyl (30CB), 17 wt%; 4′-n-pentoxy-4-cyanobiphenyl (50CB) 13 wt%; 4′-n-octyloxy-4-cyano-biphenyl (80CB) 17 wt% and 4˝-n-pentyl-4-cyanoterphenyl (5CT) 10 wt%.

Part A and part B of the epoxy resin and the liquid crystal were mixed in equal proportions by volume according to the prescription 33-1/3% part A, 33-1/3% part B and 33-1/3% liquid crystals. All three components were mixed together by gentle stirring for three minutes and then centrifuged for 1 minute to remove bubbles incorporated in the stirring process. Samples were prepared by spreading the uncured material with a uniform thickness on glass plates. After curing for 48 hours, the samples that were about 200 microns thick had a pure white opaque texture (opaque state). Samples having a film thickness between 10 and 200 microns were also white in appearance, but were less opaque. The films were peeled from the glass surfaces to yield a solid flexible material. When these films were heated to the nematic-isotropic phase transition temperature near 80°C, they abruptly become clear or transparent (clear state). The films remained clear at temperatures above 80°C and returned to a pure opaque condition when cooled below 80°C. The contrast between the opaque and clear states depended on the film thickness. Thickness of 200 ± 100 microns showed high visual contrast between the opaque and clear states. The nematic isotropic transition temperature exhibited by the clear and opaque states of the film was very near the nematic-isotropic transition temperature of the liquid crystal prior to dispersion in the epoxy resin.

### EXAMPLE II

An electrically responsive device using the same material described in Example I was constructed. In this example, the uncured mixture of Example I after centrifuging was sandwiched between two glass slides having indium oxide conductive coatings on their surfaces adjacent to the mixture. An insulating spacer (Teflon tape) was used between the glass slides to control the film thickness to approximately 75 microns. The film had a pure white opaque texture after 24 hours of curing (opaque state). When an a.c. voltage of 100 volts was applied to the conducting surfaces of the glass plates, the material turned clear (clear state). A film thickness of less than 10 microns showed less visual contrast between the clear and opaque states, and also required a smaller switching voltage. A dark or reflective background on the display was found to improve the on-off visual contrast.

A sample of area 2.0 cm² with an applied voltage of 100 volts was observed to draw 5x10⁻⁸A in the clear state giving a driving power of 5x10⁻⁶ watts.

### EXAMPLE III

An electrically responsive guest-host device that was an opaque blue in the opaque state and clear in the clear state was constructed by the addition of a blue dye to the liquid crystal mixture. The blue dye was 1-(p-n-butylphenylamino)-4-hydroxyanthraquinone. It was added to the liquid crystal mixture of Example 1, according to the proportion 1.5% by weight blue dye to 98.5% by weight liquid crystal. This mixture was then mixed with part A and part B of the epoxy resin of Example 1 in the proportion (by volume) 33-1/3% part A, 33-1/3% part B and 33-1/3% blue dye and liquid crystal. As in Example II, the material was allowed to cure between two glass slides with conductive surface coatings. In this example, a larger visual contrast between the clear and opaque states was obtained with smaller film thickness and hence lower voltages were applied to the conducting surfaces. A display having a thickness of about 10 microns was found to be driven into the clear state with an applied voltage of 25 volts.

### EXAMPLE IV

A temperature responsive film was made using the liquid crystal mixture of Example I and a two-component fast curing epoxy resin (trade designation EPO-TEK 302) consisting of bisphenol A resin, part A, and an aliphatic curing agent (part B). The epoxy resin and liquid crystal were mixed in the proportion (by volume): 25% part A, 25% part B, and 50% liquid crystal. The film preparation procedure used was identical to that of Example I. After a curing time of two days the film had an opaque white texture at temperatures below the liquid crystal isotropic-nematic transition temperature (80°C), but was clear above that temperature.

### EXAMPLE V

A method of preparation for improved homogeneity and contrast between the opaque and clear states was obtained by first mixing the one part (by volume) liquid crystal mixture of Example I with one part of part B of the epoxy resin of Example I. This mixture, which does not fall within the scope of the present invention, was an opaque white and can be used to form a thermally or electrically addressed display as described in Examples I and II, although the material does not harden and remains as a viscous liquid. The material was then made to form a solid with the addition of one part of part A mixed by gentle stirring for one minute followed by centrifuging for 5 minutes at 9000 G's. Using only the less dense material at the top of the centrifuged sample, thermally and electrically addressed displays were made having slightly higher contrast than observed in Examples I and II.

### EXAMPLE VI

A mechanical stress and temperature responsive material with light polarizing properties was prepared by the dispersion of the liquid crystal 4′-octyl-4-cyano-biphenyl (purchased as K-24 from EM Chemicals) by mixing it with a two-component epoxy resin in the proportion (by volume): 33-1/3% part A, 33-1/3% part B, and 33-1/3% liquid crystal. The epoxy resin consisted of an equimolar mixture of bisphenol A and epichlorohydrin (part A), and a fatty polyamine curing agent, part B, purchased from Bostik Division, Milano, Italy. Two samples were prepared, one using K-24 as the liquid crystal and another using a mixture (by volume) of 75% K-24 and 25% anisylidene-p-butylaniline. The stirring procedure of the mixture was identical to that of Example I. A film of thickness about 50 microns was prepared by letting the mixture cure between a microscope glass slide and a plastic cover slip. Once the mixture was cured, the plastic cover slip was easily removed so the film could be easily peeled off the glass substrate. A uniformly flat, shiny and flexible material was obtained that was opaque at room temperature.

Upon stretching this film unidirectionally, it became more transparent. The light passing through the stretched film was observed to be linearly polarized in a direction perpendicular to the stretching direction. Upon heating the material to a temperature whereby the liquid crystal was in the isotropic phase, the material became clear and no polarization was observed either in the free or in the stretched condition. Instead of a stretch, a shear or simply unidirectional pressure served to produce the same polarizing effect.

### EXAMPLE VII

An electro-responsive cell with light polarizing properties was prepared by mixing the following substances in the following order: Epoxy part B, 32.5% (by weight); nematic liquid crystal, 33.5%; spacer material, 0.7%; Epoxy part A, 33.3%. The epoxy was the same as that described in Example VI. The nematic liquid crystal was a mixture of 4′-n-pentyl-4-cyano-biphenyl (5CB), 51 wt%; 4′-n-heptyl-4-cyano-biphenyl (7CB), 21 wt%; 4′-n-octoxy-4-cyano-biphenyl, 16%; and 4′-n-pentyl-4-cyano-biphenyl (supplied as E-7 by EM Chemicals). The spacer material was alumina powder with a particle size of 26 um (supplied as Alufit PS-26 by the Atomergic Chemicals Corporation). While the mixture of liquid crystal and epoxy was still in its uncured, fluid state it was placed between two glass slides with transparent conductive coatings to which a voltage could be applied. The material was then cured for five days at -24°C. Upon subsequent warming to room temperature, the disparate coefficients of expansion of the glass slides and the epoxy resin matrix caused the matrix and the droplets of the liquid crystals dispersed in the matrix to be strained so that light passing through the material was linearly polarized as evidenced by the extinction of light viewed through a crossed polarizing lens. A voltage of 30 volts a.c. was then applied to the conductive coatings and the responsive material was switched to a state in which transmitted light was only faintly polarized.

### EXAMPLE VIII

An electro-responsive cell was constructed from a flexible epoxy resin-liquid crystal sheet stretched and sandwiched between two transparent conducting surfaces. The flexible epoxy resin-liquid crystal sheet was prepared by first mixing liquid crystal with epoxy Part B, then adding Part A in 1:1:1 proportions. The liquid crystal was 4-cyano-4′-n-octylbiphenyl (obtained as K-24 from EM Chemical Corporation). Part A was an equimolar mixture of bisphenol A and epichlorhydrin; Part B was a chemical curing agent (both purchased from Bostic Division, Milan, Italy). The epoxy resin-liquid crystal mixture was allowed to cure between two plexiglass sheets spaced about 50um apart. After curing for one day, the resultant opaque white flexible sheet was removed from the plexiglass. The sheet was stretched by about 5 to 10% in one direction and sandwiched between two glass slides. Each slide was coated on one side with a transparent conductive coating. The sandwich was constructed so that the conductive coatings faced the stretched sheet. A linearly polarizing film was oriented with the sandwiched, stretched sheet to achieve maximum extinction of transmitted light and then attached to the sandwich.

Another cell was constructed as described, except that the opaque white flexible sheet was not stretched before being sandwiched between the conductive glass slides.

When a voltage of 200 volts was applied to the cell with stretched material, the response time between opaque and clear states was in the order of one milli-second. The cell with unstretched material responded in 25-40 milliseconds. The cell with the stretched material had a significantly higher contrast between the field-on (clear) and field-off (opaque) states.

### EXAMPLE IX

A dispersion of liquid crystals in a flexible solid epoxy matrix was made by curing an epoxy-liquid crystal formulation by ultraviolet light. The epoxy formulation was a mixture of 3.8 grams of resin (Shell brand EPON resin 828), 0.4 grams of UV activated epoxy curative (3M brand FC-508) and 0.9 grams of trimethylene glycol. The liquid crystal was a mixture of 15 wt% 4-cyano-4′-n-pentylbiphenyl, 21 wt%, 4-cyano-4′n-hepylbiphenyl, 16 wt% 4-cyano-4′-octyloxybiphenyl, and 4-cyano-4′-pentyltorphenyl, 12 wt% (EM Chemical brand E-7). The dispersion was made by first mixing 0.3 grams of the epoxy formulation with 0.1 grams of the liquid crystal then allowing the mixture to cure for thirty minutes under an ultraviolet lamp. The cured material appeared an opaque white, but when heated turned clear at the nematic liquid crystal isotropic transition temperatures, thereby acting as a thermally responsive light switch. The flexible solid, opaque dispersion material also became partially clear upon stretching. The transmissive light through the stretched material was observed to be linearly polarized and would extinguish light when a crossed polarizer was placed either in front or behind the stretched material. The material only needed to be stretched 5-10% of its original length to show polarization effects. A slight compression or other mechanical distortion also showed polarization effects. When viewed through a cross polarizer the material acted as a mechanically responsive light switch.

Many modifications and variations of the invention will be apparent to those skilled in the art in light of the foregoing detailed disclosure. Therefore, it is to be understood that, within the scope of the appended claims, the invention can be practiced otherwise than as specifically shown and described.

## Claims

1. A light modulating material comprising microdroplets of liquid crystal material dispersed in a solid, cured, light transmissive epoxy resin matrix, wherein the uncured epoxy resin is mixed with said liquid crystal material and a curing agent before it is cured to form said matrix, said liquid crystal material has a nematic or smectic liquid crystal phase, said liquid crystal phase has an ordinary optical index of refraction substantially matched to the index of refraction of the matrix, and the liquid crystal directors of the microdroplets normally being oriented so that the modulating material normally scatters light when the liquid crystal material is in the liquid crystal phase.

2. A light modulating material according to claim 1 wherein the liquid crystal phase exhibits positive dielectric anisotropy.

3. A light modulating material according to claim 2 wherein the liquid crystal material is a cyanobiphenyl.

4. A light modulating material according to any preceding claim, wherein said liquid crystal directors are alignable in the presence of an electromagnetic field so that at least one component of incident light will be transmitted through the material.

5. A light modulating device comprising a light modulating material according to any one of the preceding claims, further comprising electrode means for establishing an electric field through the material to change the liquid crystal director orientation and alter the amount of light transmitted by the material.

6. A light modulating device according to claim 5 wherein the electrode means are disposed on opposed surfaces of the material, the liquid crystal directors are normally generally parallel to said opposed surfaces, and are alignable generally perpendicular to said surfaces in the presence of said field.

7. A light modulating device comprising a light modulating material according to any one of claims 1 to 3, further comprising means for thermally addressing the material for establishing a temperature change therein, so that incident light can be selectively transmitted through the material or scattered according to the temperature of the liquid crystal material.

8. A device according to claim 7 where the temperature change is sufficient to convert the liquid crystal phase to the isotropic phase.

9. A device according to any one of claims 5 to 8, wherein the light modulating material is mechanically stressed so that it exhibits enhanced contrast and switching rate between a clear state and a scattering state.

## Patentansprüche

1. Lichtmodulierendes Material, das in einer festen, ausgehärteten, lichtdurchlässigen Epoxidharzmatrix dispergierte Mikrotröpfchen eines Flüssigkristallmaterials umfaßt, worin das unausgehärtete Epoxidharz mit dem Flüssigkristallmaterial und einem Härtermittel gemischt ist, bevor es zur Bildung der Matrix ausgehärtet ist, wobei das Flüssigkristallmaterial eine nematische oder smektische Flüssigkristallphase aufweist, die einen normalen optischen Brechungsindex hat, der dem Brechungsindex der Matrix im wesentlichen gleich ist, und wobei die Flüssigkristalldirektoren der Mikrotröpfchen normalerweise orientiert sind, so daß das modulierende Material normalerweise Licht streut, wenn sich das Flüssigkristallmaterial in der Flüssigkristallphase befindet.

2. Lichtmodulierendes Material nach Anspruch 1, worin die Flüssigkristallphase positive dielektrische Anisotropie aufweist.

3. Lichtmodulierendes Material nach Anspruch 2, worin das Flüssigkristallmaterial ein Cyanobiphenyl ist.

4. Lichtmodulierendes Material nach einem der vorausgehenden Ansprüche, worin die Flüssigkristalldirektoren in Gegenwart eines elektromagnetischen Feldes ausrichtbar sind, so daß mindestens ein Bestandteil einfallenden Lichts durch das Material hindurchgelassen wird.

5. Lichtmodulierende Vorrichtung, umfassend ein lichtmodulierendes Material nach einem der vorausgehenden Ansprüche, weiterhin umfassend Elektrodenmittel für die Errichtung eines elektrischen Feldes durch das Material, um die Flüssigkristalldirektororientierung zu ändern und die durch das Material hindurchgelassene Lichtmenge zu verändern.

6. Lichtmodulierende Vorrichtung nach Anspruch 5, worin die Elektrodenmittel an gegenüberliegenden Flächen des Materials angeordnet sind, wobei die Flüssigkristalldirektoren normalerweise ungefähr parallel zu den gegenüberliegenden Flächen orientiert sind, und in Gegenwart des Feldes ungefähr senkrecht zu den Flächen ausrichtbar sind.

7. Lichtmodulierende Vorrichtung, umfassend ein lichtmodulierendes Material nach einem der Ansprüche 1 bis 3, weiterhin umfassend Mittel für thermisches Adressieren des Materials zur Herbeiführung einer Temperaturänderung darin, so daß einfallendes Licht nach Maßgabe der Temperatur des Flüssigkristallmaterials selektiv durch das Material hindurchgelassen oder gestreut wird.

8. Vorrichtung nach Anspruch 7, wo die Temperaturänderung ausreicht, um die flüssige Kristallphase in die isotropische Phase zu überführen.

9. Vorrichtung nach einem der Ansprüche 5 bis 8, worin das lichtmodulierende Material mechanisch belastet ist, so daß es gesteigerte Kontrast- und Umschaltgeschwindigkeit zwischen einem Klarzustand und einem Streuzustand aufweist.

## Revendications

1. Matériau photomodulateur comprenant des microgouttelettes d'un matériau à cristaux liquides dispersées dans une matrice de résine époxy solide, durcie, transmettant la lumière, dans lequel la résine époxy non durcie est mélangée avec ledit matériau à cristaux liquides et un agent de durcissement avant qu'elle soit durcie pour former ladite matrice, ledit matériau à cristaux liquides a une phase cristalline liquide nématique ou smectique, ladite phase cristalline liquide a un indice de réfraction optique ordinaire correspondant essentiellement à l'indice de réfraction de la matrice, et les directions des cristaux liquides des microgouttelettes étant normalement orientées de façon à ce que le matériau modulateur diffuse normalement la lumière lorsque le matériau à cristaux liquides est dans la phase cristalline liquide.

2. Matériau photomodulateur selon la revendication 1, dans lequel la phase cristalline liquide présente une anisotropie diélectrique positive.

3. Matériau photomodulateur selon la revendication 2, dans lequel le matériau à cristaux liquides est un cyanobiphényle.

4. Matériau photomodulateur selon l'une quelconque des revendications précédentes, dans lequel lesdites directions des cristaux liquides peuvent être alignées en présence d'un champ électromagnétique de manière à ce qu'au moins une composante de la lumière incidente soit transmise à travers le matériau.

5. Dispositif modulant la lumière comprenant un matériau photomodulateur selon l'une quelconque des revendications précédentes, comprenant en outre des moyens du type électrode pour créer un champ électrique à travers le matériau pour changer l'orientation de la direction des cristaux liquides et modifier la quantité de lumière transmise par le matériau.

6. Dispositif modulant la lumière selon la revendication 5, dans lequel les moyens du type électrode sont placés sur des surfaces opposées du matériau, les directions des cristaux liquides sont normalement généralement parallèles auxdites surfaces opposées, et peuvent être alignées généralement perpendiculairement auxdites surfaces en présence dudit champ.

7. Dispositif modulant la lumière comprenant un matériau photomodulateur selon l'une quelconque des revendications 1 à 3, comprenant en outre des moyens pour adresser thermiquement le matériau afin d'y créer une variation de température, de manière à ce que la lumière incidente puisse être sélectivement transmise à travers le matériau ou diffusée en fonction de la température du matériau à cristaux liquides.

8. Dispositif selon la revendication 7, dans lequel la variation de température est suffisante pour transformer la phase cristalline liquide en la phase isotrope.

9. Dispositif selon l'une quelconque des revendications 5 à 8, dans lequel le matériau photomodulateur est soumis à des efforts mécaniques de manière à ce qu'il présente un contraste et une vitesse de commutation accrus entre un état transparent et un état ou il diffuse la lumière.
